# EUROPEAN PATENT SPECIFICATION

(11) **EP 4 009 608 B1**
(45) Date of publication and mention of the grant of the patent: **19.02.2025**
(21) Application number: 21208939.5
(22) Date of filing: 18.11.2021
(51) Int. Cl.: H04L 45/00

(54) **SEGMENT ROUTING-BASED DATA TRANSMISSION METHOD AND APPARATUS**
SEGMENT-ROUTING-BASIERTES DATENÜBERTRAGUNGSVERFAHREN UND -GERÄT
PROCÉDÉ ET APPAREIL DE TRANSMISSION DE DONNÉES À BASE DE ROUTAGE DE SEGMENTS

(30) Priority: 27.11.2020 CN 202011368375; 25.01.2021 WO PCT/CN2021/073628; 10.03.2021 CN 202110261406
(43) Date of publication of application: 08.06.2022
(73) Proprietor: Huawei Technologies Co., Ltd., Shenzhen, Guangdong 518129 (CN)
(72) Inventor: QIU, Puqi, Shenzhen, 518129 (CN); HU, Zhibo, Shenzhen, 518129 (CN); XU, Guoqi, Shenzhen, 518129 (CN); ZHENG, Juan, Shenzhen, 518129 (CN); DONG, Jie, Shenzhen, 518129 (CN); LI, Zhenbin, Shenzhen, 518129 (CN)
(74) Representative: Thun, Clemens

(56) References cited:
- WO-A1-2020/052230
- WO-A1-2020/083056

## Description

### TECHNICAL FIELD

This application relates to the field of communications technologies, and in particular, to a segment routing-based data transmission method and apparatus.

### BACKGROUND

Segment routing (Segment Routing, SR) is a communications network routing technology in which a network path is divided into segments, and segment identifiers (Segment Identifiers, SID) are allocated to these segments and a forwarding node in a network. Ahead node combines SIDs corresponding to a plurality of nodes based on a transmission path to form a segment list (Segment path), and indicates each node in the transmission path to forward a packet based on the segment list, to implement network data transmission.

The SR technology includes two implementation methods. One is SR MPLS based on multi-protocol label switching (Multi-Protocol Label Switching, MPLS). To be specific, a label stack is used to describe a transmission path corresponding to network data, and a label switching router (Label Switching Router, LSR) is used to perform processing such as label pushing (Push), swapping (Swap), or popping (Pop), and forward a packet. The other one is SRv6 based on an internet protocol version 6 (Internet Protocol Version 6, IPv6) data packet. In the SRv6, an SR header (Segment Routing Header, SRH) embedded in the IPv6 data packet is used, and an SRv6 SID list is carried to indicate a transmission path corresponding to network data. Anode supporting the SRv6 parses and processes an SRv6 packet header, updates a destination IP address in the packet, and forwards the packet.

In addition, a concept of network slicing (Network Slicing) is proposed in a fifth generation (fifth generation, 5G) mobile communications network (5G network for short), to meet differentiated requirements of various types of services. The network slicing refers to dividing, on a physical network, a plurality of virtual networks including specific network functions, network topologies, and network resources, to meet service functions and quality of service requirements of users of different network slices. The network slicing enables an operator to construct a plurality of dedicated, virtualized, and isolated logical networks on a universal physical platform, to meet different requirements of different services on network capabilities.

When the SR technology is applied to a network slice scenario in the 5G network, a communication path needs to carry network slice information, and a head node encapsulates a network slice identifier (Identifier, ID) into a to-be-forwarded packet. A routing node along the path forwards the packet based on a forwarding path and the network slice identifier in the packet, to implement an end-to-end task of forwarding the service from the head node to a tail node.

In the implementation of the SR technology, a packet generated by the head node in an SR path carries a network slice identifier, and the network slice identifier is used on a forwarding path along the SR path. In this case, use of network slicing is inflexible.

Further, WO 2020/083056 A1 refers to a system and network devices for packet processing, a network device including a processor and instructions for receiving a first packet sent by a second network node, the first packet including a format of a segment identifier of the second network node describing a length and a location of each field in the segment identifier, obtaining the format based on the first packet, the segment identifier having a first field, and including a determined value of the first field in the segment identifier in a second packet sent to the second network node, the value of the first field in the segment identifier being determined based on a segment routing policy and the format, and the determined value of the first field indicating to the second network node to process the second packet.

Further, WO 2020/052230 A1 refers a transmission control method, a node, a network system, and a storage medium. The transmission control method includes encapsulating, by a node, overlay service identification information corresponding to a packet in the packet, and transmitting, by the node, the packet to a next hop using an underlay network resource dedicated to a service corresponding to the overlay service identification information.

### SUMMARY

The present invention is defined by the appended claims. This application provides a segment routing-based data transmission method and apparatus, to resolve a problem of inflexible use of network slicing. This problem is solved by the subject matter of the independent claims. Further implementation forms are provided in the dependent claims.

To achieve the foregoing objective, the following technical solutions are used in this application.

According to a first aspect, a segment routing-based data transmission method is provided, applied to a first network device. The method includes: receiving a first packet from a second network device, where the first packet includes a first SID; obtaining, based on the first SID, a first network slice identifier corresponding to the first network device; generating a second packet based on the first packet, where the second packet includes the first network slice identifier; and sending the second packet.
According to the foregoing technical solution, in a segment routing-based data transmission scenario, a network device may obtain a corresponding network slice identifier by using a SID in a received packet, encapsulate the network slice identifier into a to-be-forwarded packet, and transmit the packet to a next node. In this application, the network slice identifier is determined by using the SID in the received packet, and carried in the to-be-forwarded packet, so that a node that forwards the packet in a network can update the network slice identifier in real time, to resolve a problem of inflexible use of the network slice identifier.

In a possible implementation, the first SID is used to indicate the first network device to determine the first network slice identifier based on the first SID, and encapsulate the first network slice identifier into the second packet.

In the foregoing possible implementation, a new type of SID for encapsulating a network slice identifier is designed, to indicate the network device to determine the corresponding network slice identifier based on the type of SID, and encapsulate the network slice identifier into the to-be-forwarded packet. In this way, a manner in which the network device obtains the network slice identifier can be more flexible.

In a possible implementation, the first SID includes the first network slice identifier.

In the foregoing possible implementation, a new type of SID is designed in this application. The network slice identifier may be carried in a specific field in the type of SID, to indicate a receive node to determine the network slice identifier. This improves flexibility and convenience of indicating the network slice identifier.

In a possible implementation, an argument (arguments) part of the first SID includes the first network slice identifier.

In the foregoing possible implementation, the network slice identifier may be carried in a field of an argument part in the SID of the slice encapsulation type, to indicate the network slice identifier.

In a possible implementation, the first SID includes a function part, and the function part is used to indicate the first network device to determine the first network slice identifier based on the first SID, and encapsulate the first network slice identifier into the second packet.

In the foregoing possible implementation, when the data transmission method is applied to a segment routing over IPv6 (SRv6) scenario, a function part in the SID of the slice encapsulation type may be used to indicate the network device to determine the corresponding network slice identifier based on the SID, and encapsulate the network slice identifier into the to-be-forwarded packet. In this way, the manner in which the network device obtains the network slice identifier can be more flexible.

In a possible implementation, the first SID is a binding segment identifier (Binding SID, BSID).

In the foregoing possible implementation, when the data transmission method is applied to the segment routing over IPv6 (SRv6) scenario, the SID of the slice encapsulation type provided in this application is not limited to a common SID, and may alternatively be a BSID. The SID is used to identify a network slice identifier corresponding to a planned forwarding path indicated by the BSID.

In a possible implementation, a flow label field or a source internet protocol (IP) address in an internet protocol version 6 (IPv6) packet header of the second packet includes the first network slice identifier.

In the foregoing possible implementation, the network device may encapsulate the network slice identifier into a flow label (Flow Label) field or a source address (Source Address, SA) field into the IPv6 packet header in the to-be-forwarded second packet, to improve flexibility and convenience of encapsulating the network slice identifier.

In a possible implementation, a hop-by-hop (Hop-by-Hop, HBH) extension header or a customized extension header of the second packet includes the first network slice identifier.

In the foregoing possible implementation, the network device may encapsulate the network slice identifier into the HBH extension header or another extension packet header in the to-be-forwarded second packet, to improve flexibility and convenience of encapsulating the network slice identifier.

In a possible implementation, the second packet further includes a segment routing header (SRH), and the SRH includes the first network slice identifier.

In the foregoing possible implementation, the network device may encapsulate the network slice identifier into the SRH extension header in the to-be-forwarded second packet, to improve flexibility and convenience of encapsulating the network slice identifier.

In a possible implementation, a type length value (Type Length Value, TLV) in the SRH includes the first network slice identifier.

In the foregoing possible implementation, the network device may encapsulate the network slice identifier into a TLV field of the SRH in the to-be-forwarded second packet, to improve flexibility and convenience of encapsulating the network slice identifier.

In a possible implementation, the data transmission method is applied to the segment routing over IPv6 (SRv6) scenario.

In the foregoing possible implementation, the data transmission method may be applied to the SRv6 scenario. A network slice identifier update solution is provided based on an SRv6 transmission scenario, to widen a scenario scope for implementing this application.

In a possible implementation, a first location of the second packet includes the first network slice identifier, and the first location includes a label stack, a global label, a control word (Control Word, CW), an associated channel (Associated Channel, ACH) header, or a customized extension header.

In the foregoing possible implementation, when the data transmission method is applied to an SR MPLS scenario, the network device may add the network slice identifier to a label stack, a global label, a control word (CW), an ACH header, or another extension header in the MPLS scenario. In this way, flexibility and convenience of encapsulating the network slice identifier are improved.

In a possible implementation, the data transmission method is applied to the segment routing multi-protocol label switching (SR MPLS) scenario.

In the foregoing possible implementation, the data transmission method may be applied to an SR MPLS-based transmission scenario. A network slice identifier update solution is provided, to widen a scenario scope for implementing this application.

In a possible implementation, the second network device and the first network device belong to different interior gateway protocol (Interior Gateway Protocol, IGP) domains or autonomous system (Autonomous System, AS) domains.

When a planned network path spans network slices in a plurality of areas, network slice identifiers corresponding to different network slices may be different. For example, the second network device and the first network device belong to different IGP domains or AS domains. In this case, in the foregoing possible implementation, different network slice identifiers may be indicated in the to-be-forwarded packet, to resolve a network slice identifier update problem in a scenario in which a plurality of network slices are spanned, and improve flexibility and convenience of encapsulating the network slice identifier.

In a possible implementation, the first network slice identifier includes at least one of a flexible algorithm identifier or a slice resource identifier.

According to a second aspect, a segment routing-based data transmission method is provided, applied to a second network device. The method includes: The second network device generates a first packet, where the first packet includes a first SID, the first SID corresponds to a first network device, and the first SID is used to indicate the first network device to determine a first network slice identifier based on the first SID, and encapsulate the first network slice identifier into the first packet to obtain a second packet; and sends the first packet to the first network device.

According to the foregoing technical solution, in a segment routing-based data transmission scenario, a network device adds a SID indicating a network slice identifier to a to-be-transmitted packet, so that a next node may determine the corresponding network slice identifier by using the SID, and may encapsulate the corresponding network slice identifier into a to-be-forwarded packet. In this application, the network slice identifier is indicated in the to-be-forwarded packet, so that a node that forwards the packet in a network can update the network slice identifier, to resolve a problem of inflexible use of the network slice identifier.

In a possible implementation, the first SID includes the first network slice identifier.

In the foregoing possible implementation, a new type of SID for encapsulating a network slice identifier is designed, to indicate the network device to determine the corresponding network slice identifier based on the type of SID. In this way, a manner in which the network device obtains the network slice identifier can be more flexible.

In a possible implementation, an argument (arguments) part of the first SID includes the first network slice identifier.

In the foregoing possible implementation, a new type of SID is designed. The network slice identifier may be carried in a specific field, namely, an argument field, in the type of SID, to indicate a receive node to determine the network slice identifier based on the SID. This improves flexibility and convenience of indicating the network slice identifier.

In a possible implementation, the first SID includes a function part, and the function part is used to indicate the first network device to determine the first network slice identifier based on the first SID, and encapsulate the first network slice identifier into the second packet.

In the foregoing possible implementation, when the data transmission method is applied to a segment routing over IPv6 (SRv6) scenario, a function part in the SID of the slice encapsulation type may be used to indicate the network device to determine the corresponding network slice identifier based on the SID, and encapsulate the network slice identifier into the to-be-forwarded second packet. In this way, the manner in which the network device obtains the network slice identifier can be more flexible.

In a possible implementation, the first SID is a binding segment identifier (BSID).

In the foregoing possible implementation, when the data transmission method is applied to the segment routing over IPv6 (SRv6) scenario, the SID of the slice encapsulation type provided in this application is not limited to a common SID, and may alternatively be a BSID. The SID is used to identify a network slice identifier corresponding to a planned forwarding path indicated by the BSID, so as to improve flexibility of indicating the network slice identifier.

According to a third aspect, a segment routing-based data transmission apparatus is provided. The apparatus includes: a receiving module, configured to receive a first packet from a second network device, where the first packet includes a first segment identifier (SID); a processing module, configured to: obtain, based on the first SID, a first network slice identifier corresponding to the apparatus, and generate a second packet based on the first packet, where the second packet includes the first network slice identifier; and a sending module, configured to send the second packet.

In a possible implementation, the first SID is used to indicate the apparatus to determine the first network slice identifier based on the first SID, and encapsulate the first network slice identifier into the second packet.

In a possible implementation, the first SID includes the first network slice identifier.

In a possible implementation, an argument (arguments) part of the first SID includes the first network slice identifier.

In a possible implementation, the first SID includes a function part, and the function part is used to indicate the apparatus to determine the first network slice identifier based on the first SID, and encapsulate the first network slice identifier into the second packet.

In a possible implementation, the first SID is a binding segment identifier (BSID).

In a possible implementation, a flow label field or a source internet protocol (IP) address in an internet protocol version 6 (IPv6) packet header of the second packet includes the first network slice identifier.

In a possible implementation, a hop-by-hop (HBH) extension header or a customized extension header of the second packet includes the first network slice identifier.

In a possible implementation, the second packet further includes a segment routing header (SRH), and the SRH includes the first network slice identifier.

In a possible implementation, a type length value (TLV) in the SRH includes the first network slice identifier.

In a possible implementation, a first location of the second packet includes the first network slice identifier, and the first location includes a label stack, a global label, a control word (CW), an associated channel (ACH) header, or a customized extension header.

In a possible implementation, the second network device and the apparatus belong to different interior gateway protocol (IGP) domains or autonomous system (AS) domains.

In a possible implementation, the first network slice identifier includes at least one of a flexible algorithm identifier or a slice resource identifier.

According to a fourth aspect, a segment routing-based data transmission apparatus is provided. The apparatus includes: a processing module, configured to generate a first packet, where the first packet includes a first SID, the first SID corresponds to a first network device, and the first SID is used to indicate the first network device to determine a first network slice identifier based on the first SID, and encapsulate the first network slice identifier into the first packet to obtain a second packet; and a sending module, configured to send the first packet to the first network device.

In a possible implementation, the first SID includes the first network slice identifier.

In a possible implementation, an argument (arguments) part of the first SID includes the first network slice identifier.

In a possible implementation, the first SID includes a function part, and the function part is used to indicate the first network device to determine the first network slice identifier based on the first SID, and encapsulate the first network slice identifier into the second packet.

In a possible implementation, the first SID is a binding segment identifier (BSID).

According to a fifth aspect, a communications apparatus is provided. The communications apparatus includes a processor and a transmission interface. The processor is configured to execute instructions stored in a memory, to implement the method according to any one of the first aspect.

According to a sixth aspect, a communications apparatus is provided. The communications apparatus includes a processor and a transmission interface. The processor is configured to execute instructions stored in a memory, to implement the method according to any one of the second aspect.

According to a seventh aspect, a computer-readable storage medium is provided. The computer-readable storage medium stores instructions, and when the instructions are executed by a computer or a processor, the computer or the processor is enabled to perform the method according to any one of the first aspect.

According to an eighth aspect, a computer-readable storage medium is provided. The computer-readable storage medium stores instructions, and when the instructions are executed by a computer or a processor, the computer or the processor is enabled to perform the method according to any one of the second aspect.

According to a ninth aspect, a computer program product is provided. The computer program product includes program instructions, and when the computer program product runs on a computer, the computer is enabled to perform the method according to any one of the first aspect.

According to a tenth aspect, a computer program product is provided. The computer program product includes program instructions, and when the computer program product runs on a computer, the computer is enabled to perform the method according to any one of the second aspect.

According to an eleventh aspect, a communications system is provided. The communications system includes the first network device according to any one of the third aspect or the communications apparatus according to the fifth aspect and the second network device according to any one of the fourth aspect or the communications apparatus according to the sixth aspect.

It may be understood that any one of the segment routing-based data transmission apparatus, the communications apparatus, the computer-readable storage medium, the computer program product, and the communications system provided above may be configured to perform a corresponding method provided above. Therefore, for beneficial effects that can be achieved by any one of the segment routing-based data transmission apparatus, the communications apparatus, the computer-readable storage medium, the computer program product, and the communications system, refer to beneficial effects in the corresponding method provided above. Details are not described herein again.

### BRIEF DESCRIPTION OF DRAWINGS

FIG. 1 is a diagram of a network architecture of a communications system according to an embodiment of this application;
FIG. 2 is a schematic diagram of a format of a segment routing-based data transmission packet according to an embodiment of this application;
FIG. 3 is a schematic flowchart of a segment routing-based data transmission method according to an embodiment of this application;
FIG. 4 is a schematic flowchart of another segment routing-based data transmission method according to an embodiment of this application;
FIG. 5 is a schematic diagram 1 of an implementation of a segment routing-based data transmission method according to an embodiment of this application;
FIG. 6 is a schematic diagram 2 of an implementation of a segment routing-based data transmission method according to an embodiment of this application;
FIG. 7 is a schematic diagram 3 of an implementation of a segment routing-based data transmission method according to an embodiment of this application;
FIG. 8 is a schematic diagram of a segment routing-based data transmission apparatus according to an embodiment of this application;
FIG. 9 is a schematic diagram of another segment routing-based data transmission apparatus according to an embodiment of this application; and
FIG. 10 is a schematic diagram of a communications apparatus according to an embodiment of this application.

### DESCRIPTION OF EMBODIMENTS

In the specification, claims, and accompanying drawings of this application, the terms "first", "second", "third", and the like are intended to distinguish different objects but do not limit a particular sequence. In the embodiments of this application, the word "example" or "for example" is used to represent giving an example, an illustration, or a description. Any embodiment or design solution described as an "example" or "for example" in the embodiments of this application should not be explained as being more preferred or having more advantages than another embodiment or design solution. Specifically, use of the term such as "example" or "for example" is intended to present a related concept in a specific manner.

The following clearly and completely describes the technical solutions in the embodiments of this application with reference to the accompanying drawings in the embodiments of this application. It is clear that the described embodiments are merely some but not all of the embodiments of this application. All other embodiments obtained by a person of ordinary skill in the art based on the embodiments of this application without creative efforts shall fall within the protection scope of this application.

First, an implementation environment and an application scenario of the embodiments of this application are briefly described.

An embodiment of this application provides a segment routing-based data transmission method. The method may be applied to a segment routing (SR)-based communications network. The SR communications network may include a plurality of nodes, such as a head node, a target node, and an intermediate forwarding node, and is used for communication data transmission.

Each node in the communications network may be specifically a router. For example, the intermediate forwarding node may be an area border router (Area Border Router, ABR), for example, a border router in an interior gateway protocol (Interior Gateway Protocol, IGP) domain or an autonomous system boundary router (Autonomous System Boundary Router, ASBR) in an autonomous system (Autonomous System, AS) domain. The head node and the target node each may be an area access (Access, ACC) device, another network device, a function unit deployed on a network device, or the like. This is not specifically limited in this application.

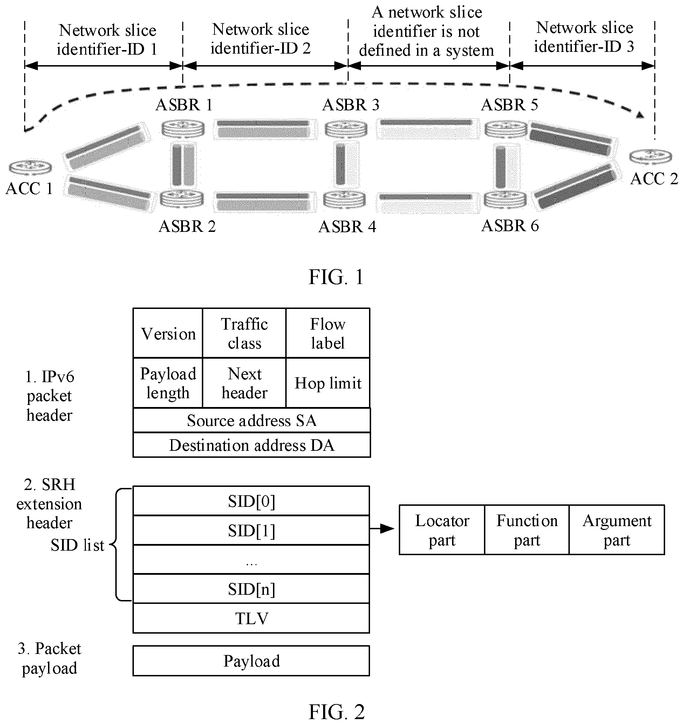

For example, as shown in FIG. 1, the communications network may include the head node ACC 1, intermediate forwarding nodes ASBR 1, ASBR 2, ..., and ASBR 6, and the target node ACC 2.

Network slices used for transmission between nodes may be the same or different. In other words, communication data between a plurality of nodes may be transmitted by using a same network slice, or may be transmitted across a plurality of different network slices. Different network slices may be indicated by using different network slice identifiers. Network slice identifiers corresponding to transmission nodes shown in FIG. 1 may be the same or different.

For example, a network slice identifier from the ACC 1 to the ASBR 1 is an ID 1. A network slice identifier from the ASBR 1 to the ASBR 3 is an ID 2. A network slice identifier from the ASBR 3 to an ASBR 5 is not defined, and a basic network slice configured in a system may be used for forwarding. For example, the basic network slice identifier is an ID 0 or the ID 1. A network slice identifier from the ASBR 5 to the ACC 2 is an ID 3.

In addition, data transmission in the communications network may be a segment routing multi-protocol label switching (Segment Routing Multi-Protocol Label Switching, SR MPLS) scenario, a segment routing over IPv6 (SRv6) scenario, or the like.

In SR MPLS, an SID list is a segment list (Segment List) obtained by sequentially arranging SIDs of links and network nodes. Because SR-MPLS SIDs on a forwarding plane are all MPLS labels, a label stack-based forwarding path may be obtained.

A label stack is a set of SR-MPLS SIDs and is used to identify a complete SR-MPLS forwarding path. In a packet forwarding process, each node searches for a corresponding link or outbound interface based on a label at the top of the label stack, pops the label, and then forwards a packet. After all labels in the label stack are popped, the packet completes transmission on the entire SR-MPLS forwarding path, and arrives at the target node.

Different from the SR-MPLS SID, in SRv6, an SRH extension header is added to an IPv6 packet to replace a conventional MPLS label forwarding function. In addition, a 128-bit IPv6 address is used as a segment identifier (SID). During data transmission, an SRv6 head node sequentially arranges SIDs of nodes that need to be specified on a forwarding path, and encapsulates, into the SRH, the SIDs in a form of a SID list, to explicitly indicate the forwarding path. An SRv6 SID list may carry SRv6 SIDs of various types or functions. Each SID specifies a processing behavior of the packet when the packet arrives at a corresponding node.

An encapsulation format of an SRv6 packet shown in FIG. 2 shows examples of an IPv6 packet header, an SRH extension header, and a packet payload (Payload). The IPv6 packet header includes a source address (Source Address, SA) field, a destination address (Destination Address, DA) field, a flow label (Flow Label) field, and the like, as shown in FIG. 2. The SRH extension header includes a SID list and a TLV field. It should be understood that the foregoing is merely an example of some content of the SRv6 packet.

The SRv6 SID includes 128 bits, and is divided into three parts: a locator (Locator) part, a function (Function) part, and an argument (Arguments) part, as shown in FIG. 2.

The locator part may be used to indicate an identifier of a network node in the network, and may be used to guide routing, so as to forward a data packet. In the SRv6 SID, the locator part is a variable-length part and is used to adapt to networks of different scales.

The function part is used to indicate an ID value allocated by a device to a local forwarding instruction. The value may be used to indicate a forwarding action that the device needs to perform, and the value is equivalent to an operation code of a computer instruction. In SRv6 network programming, different forwarding behaviors are represented by different function IDs.

The argument part is used to indicate arguments required when the forwarding instruction is executed, and the arguments may include a stream, a service, or any other related variable information.

Further, to reduce a quantity of SID layers encapsulated into the data packet by the node in the network, the SRv6 may further include a binding segment identifier (Binding Segment Identifier, BSID). When a network node encounters a BSID when forwarding the packet, an address pointed by an offset in a SID list corresponding to the BSID is used to encapsulate a destination address of the packet, and the SID list corresponding to the BSID is encapsulated into the packet. To simplify description, in this embodiment of this application, when the destination address of the packet is BSID-L, it indicates that an address pointed by an offset in an SR list corresponding to the BSID is used as the destination address; and when the destination address is the BSID, it indicates that the destination address is a BSID address. If the SRH uses the BSID, the SRH is the SR list address corresponding to the BSID.

With reference to FIG. 1, this application provides a segment routing-based data transmission method, so that a network slice identifier is carried in a to-be-transmitted packet, to resolve a problem of inflexible use of the network slice identifier.

Specifically, when communication data needs to span a plurality of network slices, an SID list is planned for different network slices, and a special type of SID or BSID is defined on a border node of the network slice to associatively indicate to encapsulate a network slice identifier into the data packet. The SID or BSID is planned into a SID list of an SR path, and the network slice identifier in the packet is updated by using the special type of SID or BSID during packet forwarding. In particular, data transmission can be performed across the plurality of network slices.

The method may be applied to a first network device. The first network device may be an intermediate forwarding node in a communication path in the communications network, for example, may be any ASBR node shown in FIG. 1 and configured to transmit communication data.

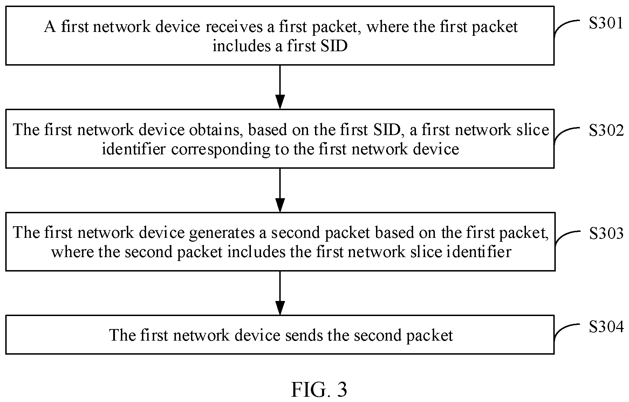

As shown in FIG. 3, the method may include the following steps.

S301: The first network device receives a first packet, where the first packet includes a first SID.

The first SID corresponds to the first network device. When receiving the first packet and identifying that the first SID included in the first packet is a local SID, the first network device processes the first packet, and forwards the packet to a next node based on an indication of a transmission path (for example, a SID list) in the first packet.

In an example, the first packet may be from a second network device. In other words, the first network device receives the first packet from the second network device. The second network device may be a head node in a communication path of current transmission, or the second network device may be a previous intermediate forwarding node of the first network device in the communication data transmission path.

The second network device and the first network device may be configured with different network slices or a same network slice. Specifically, the second network device and the first network device are configured with a same network slice identifier or different network slice identifiers. Alternatively, the second network device and the first network device are not configured with a network slice identifier, and forwarding may be performed based on a basic network slice configured in a system.

It should be noted that the data transmission method may be applied to a segment routing multi-protocol label switching SR MPLS scenario, and the first packet may be specifically the foregoing MPLS packet. Alternatively, the data transmission method may be applied to a segment routing over IPv6 (SRv6) scenario. In other words, the first packet may be specifically the foregoing SRv6 packet. In this application, different implementations of this application are separately described based on the foregoing two different SR scenarios.

S302: The first network device obtains, based on the first SID, a first network slice identifier corresponding to the first network device.

Specifically, the first network slice identifier may include at least one of a flexible algorithm identifier or a slice resource identifier.

The flexible algorithm identifier is an identifier, defined by using a software algorithm, of a network link. The slice resource identifier may be used to indicate resources, such as a sub-interface, a queue, or a buffer, that are on a physical port in the network and that are allocated to a network slice. In addition, the network slice identifier may alternatively be allocated based on another algorithm. This is not specifically limited in this application.

In an implementation, the first SID may be a special type of customized SID. The first SID may be used to indicate the first network device to determine the first network slice identifier based on the first SID, and encapsulate the first network slice identifier into a second packet.

The first SID may include the first network slice identifier. Specifically, an argument (Arguments) part of the first SID may include the first network slice identifier.

For example, an SRv6 SID type may be customized as a slice-encapsulated SID, for example, End. SLID.Encaps. A function of this type of SID is to indicate the first network device to encapsulate an IPv6 network slice identifier (slice ID for short) into a to-be-forwarded packet.

The first network device encapsulates the first network slice identifier into the generated second packet, and the first network slice identifier may be obtained by querying a local network slice configuration table. For example, a network slice mapping table is locally preconfigured on the first network device, and the network slice mapping table includes a mapping relationship between a plurality of SIDs of the network node and network slice identifiers. In this case, the first network device may obtain, based on the first SID of the current node, the first network slice identifier corresponding to the first SID.

In addition, the first network device may alternatively obtain the first network slice identifier by using information carried in the first packet.

In an implementation, the first network slice identifier may be specifically carried in a field of the argument (Arguments) part of the first SID in the first packet, or the first network slice identifier may be specifically carried in a type length value (Type Length Value, TLV) field of an SRH extension header of the first packet.

Specifically, in a packet forwarding process, when the first network device identifies that a type of the first SID carried in the first packet is the foregoing slice encapsulation type of the SID, the first network device obtains the first network slice identifier from the argument field in the first SID of the first packet, or the first network device obtains the first network slice identifier from the TLV field in the SRH packet header of the first packet, to obtain the first network slice identifier corresponding to the first network device.

S303: The first network device generates the second packet based on the first packet, where the second packet includes the first network slice identifier.

After obtaining the first network slice identifier corresponding to the first SID, the first network device may generate the second packet based on the first packet, and add the first network slice identifier to the second packet.

In an implementation, a function (Function) part included in the first SID may alternatively be used to indicate the first network device to determine the first network slice identifier based on the first SID, and encapsulate the first network slice identifier into the second packet.

Specifically, when the data transmission method is applied to the segment routing over IPv6 (SRv6) scenario, the first network slice identifier included in the second packet may be carried in an IPv6 packet header, a hop-by-hop (Hop-by-Hop, HBH) extension header, or another customized extension header of the second packet.

In an implementation, a flow (Flow) label field or a source address (SA) field in the IPv6 packet header of the second packet includes the first network slice identifier.

In an implementation, the HBH extension header or the another customized extension header of the second packet includes the first network slice identifier.

In an implementation, the second packet further includes an SRH extension header, and the SRH includes the first network slice identifier.

In an implementation, the first SID in the foregoing implementation may be a BSID. In other words, a special type of BSID is defined, and is used to indicate the first network device to determine the first network slice identifier based on the first SID, and encapsulate the first network slice identifier into the second packet.

Based on specific embodiments, different encapsulation formats in which each node in communication transmission generates a to-be-forwarded packet and encapsulates a network slice identifier into the to-be-forwarded packet are subsequently described in detail in this application. Details are not described herein again.

In another implementation, when the data transmission method is applied to the SR MPLS scenario, the first network slice identifier included in the second packet may be carried at a first location of the second packet. The first location may include a label stack, a global label, a control word (CW), an associated channel (Associated Channel, ACH) header, or another customized extension header of an MPLS packet.

In other words, the first network slice identifier may be included in the label stack, the global label, the control word (CW), the ACH header, or the another customized extension header in the second packet sent by the first network device.

In an implementation, the second network device and the first network device may belong to different interior gateway protocol (Interior Gateway Protocol, IGP) domains or autonomous system (Autonomous System, AS) domains.

The internet may be divided into a plurality of domains or a plurality of autonomous systems. A domain (domain) is a set of hosts and routers that use a same routing protocol and is managed by a single organization. An IGP is used to select a route in a domain. For example, a route used for a small-scale network, for example, a campus network or a simple regional network is selected. An AS is a small unit that has the right to independently decide which routing protocol should be used in the system, and may be a separate and manageable network unit.

For example, generally, network slice division may be performed on an IGP domain or an AS domain. To be specific, a plurality of network slices may be obtained through division in the IGP domain or the AS domain, and each network slice may be indicated by using a different network slice identifier.

The second network device and the first network device may belong to different IGP domains or AS domains. Therefore, data transmission between the second network device and the first network device may be performed by using different network slices included in the IGP domains. Alternatively, the second network device and the first network device may belong to different network slices included in different AS domains.

The IGP domain or the AS domain may be indicated by using a same network slice identifier, or may be indicated by using different network slice identifiers. Therefore, network slice identifiers corresponding to the second network device and the first network device may be the same or different.

S304: The first network device sends the second packet.

The first network device may send the second packet to the next node based on the transmission path indicated in the first packet.

In addition, the method may be applied to a second network device. The second network device may be an intermediate forwarding node in a piece of communication data in the communications network, for example, may be any ASBR node shown in FIG. 1 and configured to transmit communication data, or the head node ACC 1.

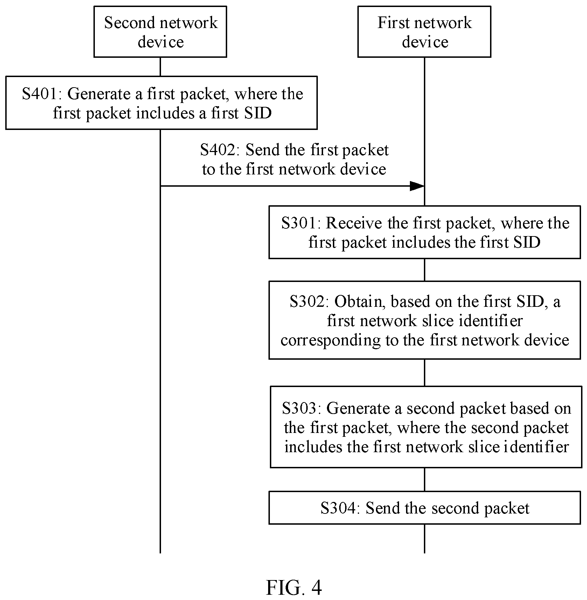

As shown in FIG. 4, the method may include the following steps.

S401: The second network device generates a first packet, where the first packet includes a first SID.

The first SID corresponds to a first network device, and the first SID may be used to indicate the first network device to determine a first network slice identifier based on the first SID, and encapsulate the first network slice identifier into the first packet to obtain a second packet.

In an implementation, based on pre-configuration, the first SID may be a special type of customized SID, and the first SID may include the first network slice identifier. Specifically, an argument (Arguments) part of the first SID may include the first network slice identifier.

For example, an SRv6 SID type may be customized as a slice-encapsulated SID, for example, End. SLID.Encaps. A function of this type of SID is to indicate the first network device to encapsulate an IPv6 network slice identifier (slice ID for short) into a to-be-forwarded packet.

In an implementation, the first network slice identifier may be specifically carried in a field of the argument (Arguments) part of the first SID in the first packet, or the first network slice identifier may be specifically carried in a type length value (Type Length Value, TLV) field of an SRH extension header of the first packet.

In addition, the first SID may further include a function (Function) part. The function part is used to indicate the first network device to determine the first network slice identifier based on the first SID, and encapsulate the first network slice identifier into the second packet.

In an implementation, the first SID in the foregoing implementation may be a binding segment identifier (BSID).

S402: The second network device sends the first packet to the first network device.

It should be noted that the steps performed by the second network device shown in FIG. 4 may correspond to the steps performed by the second network device in the foregoing implementations shown in FIG. 3, or may not correspond to the steps performed by the second network device in the foregoing implementations shown in FIG. 3, and indicate only steps performed by different network devices. This is not specifically limited in this application.

According to the foregoing implementations of this application, in a segment routing-based data transmission scenario, a network device may indicate a corresponding network slice identifier by using a SID in a transmitted packet, to encapsulate the network slice identifier into a to-be-forwarded packet and transmit the network slice identifier to a next node. In this application, the network slice identifier is determined by using a received packet, and the network slice identifier is carried in the to-be-forwarded packet, so that a node that forwards the packet in a network can update the network slice identifier in real time, to resolve a problem of inflexible use of the network slice identifier.

Further, when data transmission needs to span a plurality of network slices, the network slice identifier may be encapsulated into the transmitted packet to obtain the to-be-forwarded packet, so as to implement cross-network slice data transmission. This method is applicable to packet encapsulation and forwarding in different scenarios such as an SR MPLS scenario and an SRv6 scenario, and can improve performance of a segment routing-based data transmission technology.

With reference to the schematic diagram of the network structure shown in FIG. 1, the following uses the SRv6 scenario as an example to specifically describe a process in which each node in FIG. 1 receives a packet, processes the packet, and generates a to-be-forwarded packet.

### Embodiment 1

In an implementation, the first SID in the foregoing embodiment may be a BSID.

The BSID may be used as an interface for providing an external network service in an SRv6 policy. A forwarding behavior of a node corresponding to the BSID is to encapsulate an SR list corresponding to the SRv6. In other words, as long as the BSID is encapsulated into a packet, service traffic can be directed to the SR list.

For example, an ASBR. SE SID in this embodiment of this application refers to a special type of slice-encapsulated SID allocated by a node ASBR, namely, the foregoing SID of the End.SLID.Encaps type.

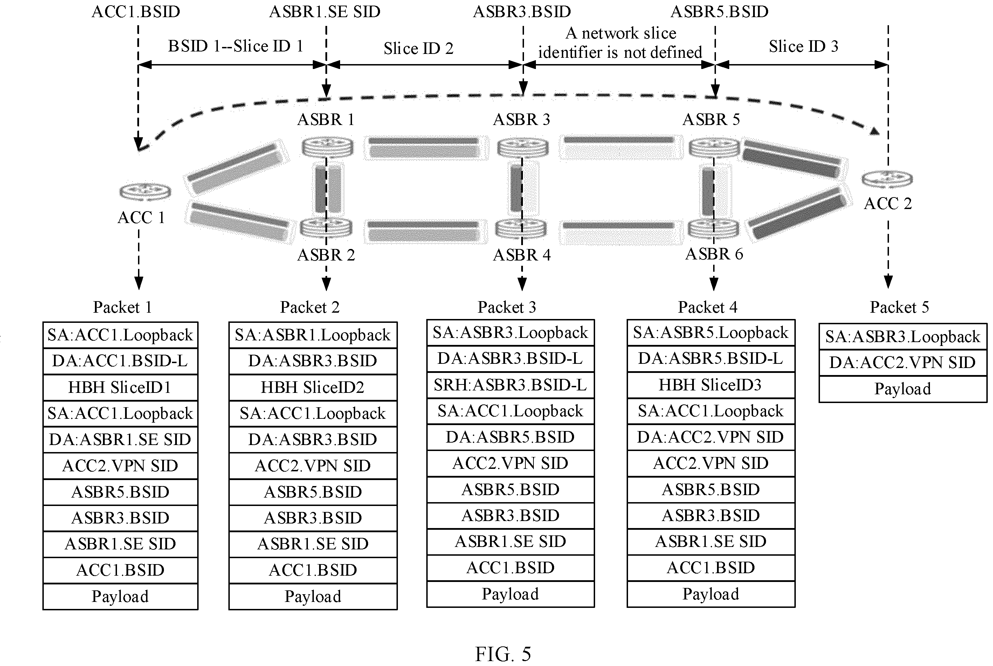

As shown in FIG. 5, a network slice identifier of a network slice 1 between a head node ACC 1 and an ASBR 1 is a slice ID 1, and an intra-domain explicit path is a SID list 1 that is from the ACC 1 to the ASBR 1 and that is obtained from ACC1.BSID in the SID list 1. In other words, the SID list 1 between the ACC 1 and the ASBR 1 corresponds to a BSID 1, and a destination address is identified by ACC1.BSID-L in the figure.

A network slice identifier of a network slice 2 between the ASBR 1 and an ASBR 3 is a slice ID 2, and ASBR3.B SID in the SR list 1 is used as a destination address for shortest path forwarding.

No network slice identifier is defined for a network slice 3 between the ASBR 3 and an ASBR 5, and an intra-domain explicit path is a SID list that is from the ASBR 3 to the ASBR 5 and that is obtained from the ASBR3.B SID in the SR list 1. A destination address is identified by ASBR3.BSID-L in the figure. A network slice indicated by the SID may be used for forwarding, or a basic slice may be used for forwarding.

A network slice identifier of a network slice 4 between the ASBR 5 and an ACC 2 is a slice ID 3, and an intra-domain explicit path is a SID list that is from the ASBR 5 to the ACC 2 and that is obtained from ASBR5.BSID in the SR list 1. A destination address is identified by ASBR5.BSID-L in the figure.

For example, as shown in FIG. 5, service traffic spans a plurality of network slices from the head node ACC 1, to arrive at a target node ACC 2.

In some network slices, the SID of the End.SLID.Encaps type may be used to indicate a domain border node to encapsulate a network slice identifier, the network slice identifier may be encapsulated into an HBH extension header, and a next SID is used as a destination address for shortest path forwarding in the domain.

In some other network slices, an SID list may be defined by using an explicit path, and a BSID corresponding to the SID list is set as a slice-Encap type. When a BSID is matched, a network node encapsulates a new IPv6 packet header, HBH extension header, and SRH extension header based on an original packet. The HBH extension header may carry a network slice identifier corresponding to the BSID, and the SRH extension header may carry a SID list corresponding to the BSID. A last-hop SID in the SID list corresponding to the BSID needs to be a USD-type SID, and a tail node indicated by the explicit path performs an operation of stripping the packet header.

A process in which each node processes a packet and forwards the packet is as follows:
1. The ACC 1 processes the original packet, and encapsulates an outer IPv6 header, SRH extension header, and HBH extension header based on the original packet before the packet enters a tunnel, to obtain a packet 1. A DA in the IPv6 packet header of the packet 1 is the node ASBR 1, and a slice ID encapsulated into the HBH extension header of the packet 1 is the slice ID 1.
2. The ASBR 1 processes the received packet 1. When the packet 1 arrives, the ASBR 1 identifies that a DA address in the IPv6 packet header included in the packet 1 is a local address ASBR1.SE SID, and the SID is a special SID used to indicate network slice identifier encapsulation. For example, a network slice identifier included in an argument field of the ASBR1.SE SID is the slice ID 2, or a network slice identifier included in a TLV field in the SRH extension header of the packet 1 is the slice ID 2.

In this case, the ASBR 1 may obtain the network slice identifier of the local domain from the argument field of the ASBR1. SE SID or the TLV field in the SRH extension header, and the slice ID is the slice ID 2.

The ASBR 1 re-encapsulates a new outer IPv6 packet header and HBH extension header into the obtained original packet to obtain a packet 2. In this case, a DA in the IPv6 packet header of the packet 2 is the node ASBR 3, and a network slice identifier, corresponding to the node ASBR 3, that is included in the HBH extension header is the slice ID 2.

Specifically, the network slice identifier in the HBH extension header in the packet 2 may be the slice ID 2 obtained from the argument field of the ASBR1. SE SID in the packet 1. The IPv6 destination address in the outer IPv6 header of the packet 2 is a next SID, namely, the ASBR3 .BSID, indicated by the SRH extension header in the packet 1. No explicit path is specified for the packet 2 in the domain. Therefore, an SRH extension header does not need to be encapsulated. The destination address is used for shortest path forwarding, and the packet is processed based on the network slice identifier and by using a resource reserved for the slice.

3. The ASBR 3 processes the received packet 2. When the packet 2 arrives at the ASBR 3, the ASBR 3 pops the outer IPv6 header and HBH extension header that are encapsulated by the ASBR 1. The ASBR 3 re-encapsulates an IPv6 packet header, an HBH extension header, and an SRH extension header based on the ASBR3.BSID, to obtain a packet 3.

In this case, because the ASBR 3 does not correspond to a network slice identifier, a network slice identifier may not be encapsulated into the HBH extension header of the packet 3, or HBH extension header information of the original packet may be inherited, or a value of the network slice identifier in the HBH extension header of the packet 3 may be set to 0. Specifically, an encapsulation rule of the network slice identifier may be determined in a preconfigured manner, and manners such as a manner in which a basic slice ID is encapsulated by default or a manner in which a slice ID is not encapsulated by default are defined.

4. The ASBR 5 processes the received packet 3. When the packet 3 arrives at the ASBR 5, the ASBR 5 pops the IPv6 packet header, the HBH extension header, and the SRH extension header that are encapsulated by the ASBR 3, and re-encapsulates an IPv6 packet header, an HBH extension header, and an SRH extension header based on the ASBR5.BSID to obtain a packet 4. In this case, a network slice identifier, in the HBH extension header of the packet 4, that is obtained by the ASBR 5 is the slice ID 3.

5. The ACC 2 processes the received packet 4. When the packet 4 arrives at the ACC 2, a last-hop SID in a previous SID list of the ASBR 5 is of a USD type. In this case, the ACC 2 pops the IPv6 packet header, the HBH extension header, and the SRH extension header that are encapsulated by the ASBR 5 in the packet 4, and the ACC 2 forwards the packet based on a destination address in an inner IP header. A corresponding SID is a VPN SID. The service packet enters a private network and completes forwarding in the SR network.

In addition, it should be noted that, in the foregoing implementation, when each node updates network slice information in the HBH extension header in the packet generating process, and the local BSID has a slice ID attribute, HBH information is added between the SRH extension header and the IPv6 packet header, and the slice ID is carried. If the original packet includes the HBH information, information other than the slice ID in the HBH extension header needs to be inherited to a newly added HBH extension header.

In the foregoing implementation, description is provided by using an example in which the network slice identifier corresponding to the network slice between the forwarding nodes is carried in the HBH extension header. In addition, the network slice identifier may alternatively be carried in a flow (Flow) label field in the IPv6 packet header, or may be carried in a source IP address, namely, a SA, in the IPv6 packet header, or may be carried in another customized extension header. For a specific packet generation and forwarding manner, refer to the foregoing implementation shown in FIG. 5. Details are not described one by one in this application.

### Embodiment 2

For example, in this embodiment, a BSID encapsulation manner is used as an example to describe a process in which each node processes a packet and forwards the packet.

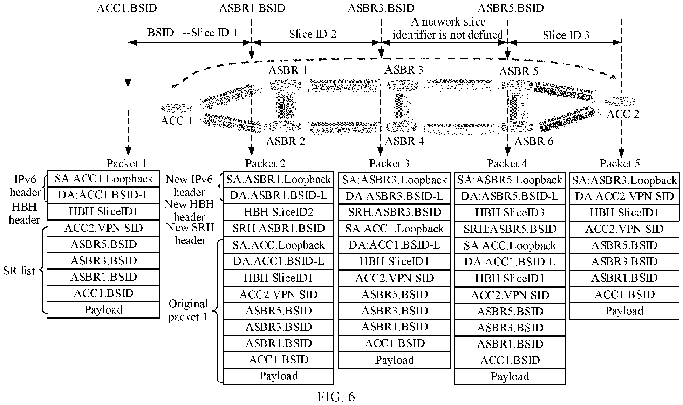

As shown in FIG. 6, service traffic spans a plurality of network slices from a head node ACC 1, to arrive at a target node ACC 2. An SID list is defined for each network slice, and a BSID corresponding to the SID list is used to perform packet encapsulation processing.

Specifically, when a BSID is matched, an encapsulation operation is performed on a received packet, and a new IPv6 packet header, HBH extension header, and SRH extension header are encapsulated at an outer layer of the packet. The HBH extension header may carry a network slice identifier corresponding to the BSID, and the SRH header may carry a SID list corresponding to the BSID. A last-hop SID in the SID list may be a SID type that can perform popping operations such as encapsulating a new IPv6 packet header, HBH extension header, or SRH extension header at an outer layer of a packet, for example, may be a USD-type SID or another type of SID. The SID may be used to perform an operation of stripping the foregoing packet header.

For example, as shown in FIG. 6, a network slice identifier of a network slice 1 between the head node ACC 1 and an ASBR 1 is a slice ID 1, and a SID list 1 between the ACC 1 and the ASBR 1 corresponds to a B SID 1. A network slice identifier between the ASBR 1 and an ASBR 3 is a slice ID 2, and a SID list 2 between the ASBR 1 and the ASBR 3 corresponds to a BSID 2. A SID list 3 between the ASBR 3 and an ASBR 5 corresponds to a BSID 3. No network slice identifier is defined between the ASBR 3 and the ASBR 5, and a basic slice may be used for forwarding. A network slice identifier between the ASBR 5 and the ACC 2 is a slice ID 3, and a SID list 4 between the ASBR 5 and the ACC 2 corresponds to a BSID 5.

A process in which each node processes a packet and forwards the packet is as follows:
1. The ACC 1 processes an original packet, and encapsulates an outer IPv6 header, SRH extension header, and HBH extension header based on the original packet before the packet enters a tunnel, to obtain a packet 1. ADA in the IPv6 packet header of the packet 1 is the node ASBR 1, and a slice ID encapsulated into the HBH extension header of the packet 1 is the slice ID 1.
2. The ASBR 1 processes the received packet 1. When the packet 1 arrives, the ASBR 1 identifies the BSID and re-encapsulates an outer IPv6 header, SRH extension header, and HBH extension header into the packet 1 to obtain a packet 2. In this case, a network slice identifier included in the outer HBH extension header is the slice ID 2 corresponding to the ASBR 1.
3. The ASBR 3 processes the received packet 2. When the packet 2 arrives at the ASBR 3, a last-hop SID in a previous SID list of the ASBR 3 is of a USD type, and the outer IPv6 packet header, SRH extension header, and HBH extension header that are encapsulated by the ASBR 1 and that are included in the packet 2 are popped. The ASBR 3 re-encapsulates an IPv6 header, an SRH extension header, and an HBH extension header to obtain a packet 3.
   In this case, because the ASBR 3 does not correspond to a network slice identifier, a network slice identifier may not be encapsulated into the HBH extension header of the packet 3, or HBH extension header information of the original packet may be inherited, or a value of the network slice identifier in the HBH extension header of the packet 3 may be set to 0. Specifically, an encapsulation rule of the network slice identifier may be determined in a preconfigured manner. Details are not described in this application again.
4. The ASBR 5 processes the received packet 3. When the packet 3 arrives at the ASBR 5, the last-hop SID in the previous SID list of the ASBR 3 is of the USD type, and the outer IPv6 packet header, SRH extension header, and HBH extension header that are encapsulated by the ASBR 3 and that are included in the packet 3 are popped. The ASBR 5 re-encapsulates an outer IPv6 header, SRH extension header, and HBH extension header to obtain a packet 4. In this case, a network slice identifier in the HBH extension header of the packet 4 is the slice ID 3.
5. The ACC 2 processes the received packet 4. When the packet 4 arrives at the ACC 2, a last-hop SID in a previous SID list of the ASBR 5 is of the USD type. In this case, the outer IPv6 packet header, SRH extension header, and HBH extension header that are encapsulated by the ASBR 5 and that are included in the packet 4 are popped, and the ACC 2 continues to perform forwarding based on the SRH. A corresponding SID is a VPN SID. The service packet enters a private network and completes forwarding in the SR network.

In addition, it should be noted that, in the foregoing implementation, when re-encapsulating the outer HBH extension header in the packet generating process, each node may inherit information in the HBH extension header of the original packet to the new HBH extension header.

In the foregoing implementation, description is provided by using an example in which the network slice identifier corresponding to the network slice between the forwarding nodes is carried in the HBH extension header. In addition, with reference to FIG. 2, the network slice identifier may alternatively be carried in a flow (Flow) label field in the IPv6 packet header, or may be carried in a source IP address, namely, a SA, in the IPv6 packet header, or may be carried in another customized extension header. Details are not described herein again.

### Embodiment 3

This embodiment of this application further provides another network slice identifier encapsulation manner. To be specific, a network slice identifier is encapsulated into a TLV field of an SRv6 packet. Specifically, the TLV field may be filled with the network slice identifier and a SID of a last-hop node in a SID list corresponding to the network slice. Therefore, when processing a received packet and forwarding the packet, each node may update a network slice identifier in an HBH extension header based on a correspondence between the network slice identifier indicated in the TLV field and a SID of a border node, to implement cross-network slice communication transmission.

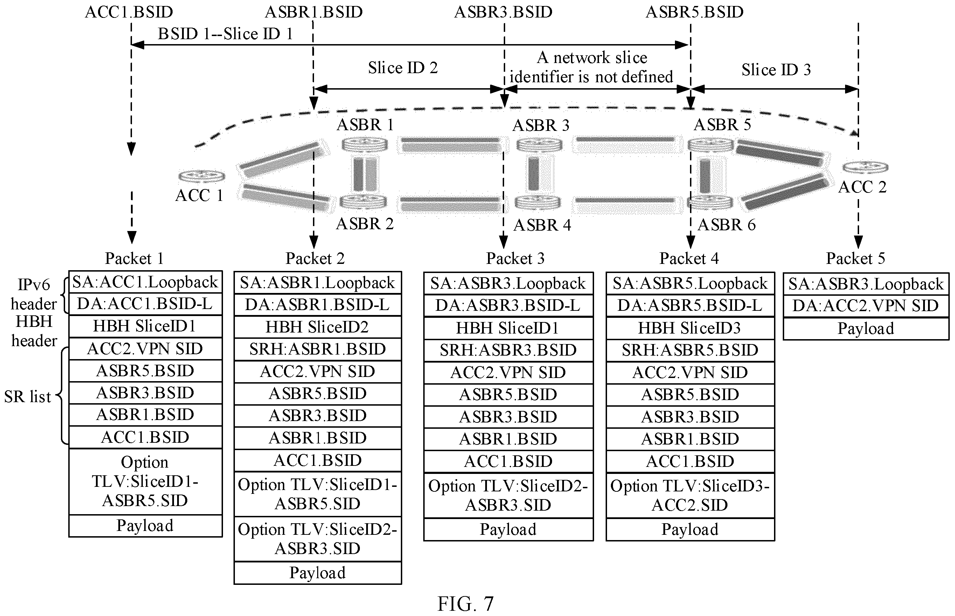

For example, as shown in FIG. 7, a network slice identifier of a network slice 1 between a head node ACC 1 and an ASBR 1 is a slice ID 1, and a SID list 1 between the ACC 1 and the ASBR 1 corresponds to a B SID 1. A network slice identifier between the ASBR 1 and an ASBR 3 is a slice ID 2, and a SID list 2 between the ASBR 1 and the ASBR 3 corresponds to a BSID 2. A SID list 3 between the ASBR 3 and an ASBR 5 corresponds to a BSID 3. No network slice identifier is defined between the ASBR 3 and the ASBR 5, and a basic slice may be used for forwarding. A network slice identifier between the ASBR 5 and an ACC 2 is a slice ID 3, and a SID list 4 between the ASBR 5 and the ACC 2 corresponds to a BSID 5.

A process in which each node processes a packet and forwards the packet is as follows:
1. The ACC 1 processes an original packet, and encapsulates an outer IPv6 header, SRH extension header, and HBH extension header based on the original packet before the packet enters a tunnel, to obtain a packet 1. A slice ID encapsulated into the packet 1 is the slice ID 1, and an SRv6 option TLV is further encapsulated into the packet 1. The option TLV includes a corresponding SID of a last-hop device in a SID list when the slice ID is the slice ID 1, and this border node is a node that pops the option TLV.
   For example, as shown in FIG. 7, the SID of the last-hop device in the SID list corresponding to the slice ID 1 is the ASBR 5. In this case, the option TLV includes a correspondence between the slice ID 1 and the ASBR 5. To be specific, when the node ASBR 5 processes the packet and forwards the packet, the correspondence between the slice ID 1 and the ASBR 5 included in the option TLV in the packet may be popped.
2. The ASBR 1 processes the received packet 1. When the packet 1 arrives at the ASBR 1, the ASBR 1 identifies the BSID, re-encapsulates and inserts a new SRH extension header into the SRH extension header of the packet 1, updates the network slice identifier in the HBH extension header of the packet 1 to the slice ID 2, and presses a current slice ID (the slice ID 2) and SID information of a corresponding border node into the option TLV to obtain a packet 2, so as to record a correspondence between the slice ID 2 and a SID of a last node in a corresponding SID list.
3. The ASBR 3 processes the received packet 2. When the packet 2 arrives at the ASBR 3, the SRH extension header encapsulated by the ASBR 1 in the packet 2 is popped. When the ASBR 3 reads that a SID corresponding to the slice ID in the option TLV is a local SID, a correspondence between the local SID and the slice ID in the option TLV is popped, and the ASBR 3 reinserts a new SRH extension header to obtain a packet 3. In this case, the slice ID in the HBH extension header is updated to the slice ID 1.
   For example, if the ASBR 3 reads that the SID corresponding to the slice ID in the option TLV is not the local SID, the ASBR 3 encapsulates the slice ID into the HBH extension header. For example, the slice ID in the HBH extension header is still the slice ID 2.
4. The ASBR 5 processes the received packet 3. When the packet 3 arrives at the ASBR 5, the SRH extension header encapsulated by the ASBR 3 in the packet 3 is popped. When the ASBR 5 reads that the SID corresponding to the slice ID (the slice ID 1) in the option TLV is the local SID, a correspondence between the local SID and the slice ID (the slice ID 1) in the option TLV is popped, and the ASBR 5 re-encapsulates an SRH extension header to obtain a packet 4.
   In this case, a slice ID in the HBH extension header in the packet 4 obtained by the ASBR 5 is the slice ID 3, a layer of option TLV is popped, and another layer of TLV is re-encapsulated. A correspondence between the slice ID 3 and the border node ACC 2 is recorded.
5. The ACC 2 processes the received packet 4. When the packet 4 arrives at the ACC 2, the SRH extension header that is encapsulated by the ASBR 5 and that is included in the packet 4 is popped. When the ACC 2 reads the option TLV, and obtains that a border SID of the slice ID (the slice ID 3) is the local SID, information about the slice ID 3 in the option TLV is popped. In this case, a SID of the ACC 2 is a VPN SID, and the service packet enters a private network and completes forwarding in the SR network.

According to the foregoing implementation of this application, when a service packet needs to be transmitted across a plurality of network slices, a network slice identifier may be encapsulated into the transmitted packet, and the network slice identifier may be updated based on an actual network slice, to implement cross-network slice data transmission. In the foregoing implementations of this application, packet encapsulation is separately described in different scenarios based on the SR MPLS and the SRv6, so that performance of a segment routing-based data transmission technology can be improved, and user experience can be improved.

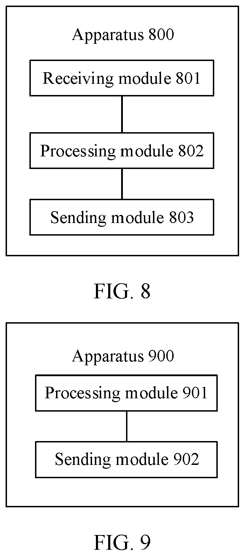

Based on this, an embodiment of this application further provides a segment routing-based data transmission apparatus 800. As shown in FIG. 8, the apparatus 800 may include a receiving module 801, a processing module 802, and a sending module 803.

The receiving module 801 may be configured to receive a first packet from a second network device, where the first packet includes a first segment identifier (SID).

The processing module 802 may be configured to: obtain, based on the first SID, a first network slice identifier corresponding to the apparatus 800, and generate a second packet based on the first packet, where the second packet includes the first network slice identifier.

The sending module 803 may be configured to send the second packet.

In a possible implementation, the first SID is used to indicate the apparatus 800 to determine the first network slice identifier based on the first SID, and encapsulate the first network slice identifier into the second packet.

In a possible implementation, the first SID includes the first network slice identifier.

In a possible implementation, an argument (arguments) part of the first SID includes the first network slice identifier.

In a possible implementation, the first SID includes a function part, and the function part is used to indicate the apparatus to determine the first network slice identifier based on the first SID, and encapsulate the first network slice identifier into the second packet.

In a possible implementation, the first SID is a binding segment identifier (BSID).

In a possible implementation, a flow label field or a source internet protocol (IP) address in an internet protocol version 6 (IPv6) packet header of the second packet includes the first network slice identifier.

In a possible implementation, a hop-by-hop (HBH) extension header or a customized extension header of the second packet includes the first network slice identifier.

In a possible implementation, the second packet further includes a segment routing header (SRH), and the SRH includes the first network slice identifier.

In a possible implementation, a type length value (TLV) in the SRH includes the first network slice identifier.

In a possible implementation, a first location of the second packet includes the first network slice identifier, and the first location includes a label stack, a global label, a control word (CW), an associated channel (ACH) header, or a customized extension header.

In a possible implementation, the second network device and the apparatus 800 belong to different interior gateway protocol (IGP) domains or autonomous system (AS) domains.

In a possible implementation, the first network slice identifier includes at least one of a flexible algorithm identifier or a slice resource identifier.

In addition, an embodiment of this application further provides a segment routing-based data transmission apparatus. As shown in FIG. 9, the apparatus 900 may include a processing module 901 and a sending module 902.

The processing module 901 may be configured to generate a first packet. The first packet includes a first SID, the first SID corresponds to a first network device, and the first SID is used to indicate the first network device to determine a first network slice identifier based on the first SID, and encapsulate the first network slice identifier into the first packet to obtain a second packet.

The sending module 902 may be configured to send the first packet to the first network device.

In a possible implementation, the first SID includes the first network slice identifier.

In a possible implementation, an argument (arguments) part of the first SID includes the first network slice identifier.

In a possible implementation, the first SID includes a function part, and the function part is used to indicate the first network device to determine the first network slice identifier based on the first SID, and encapsulate the first network slice identifier into the second packet.

In a possible implementation, the first SID is a binding segment identifier (BSID).

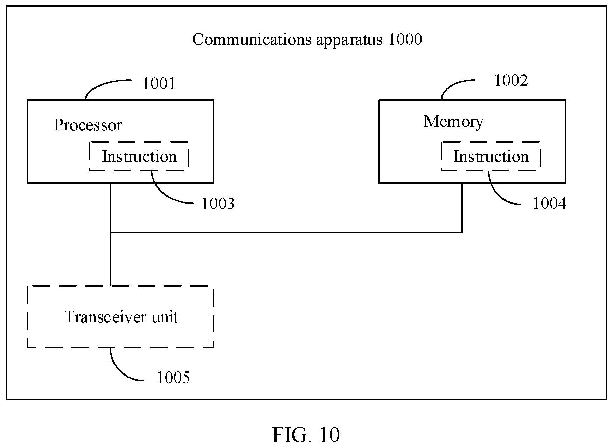

In addition, this application further provides a communications apparatus 1000. As shown in FIG. 10, the communications apparatus 1000 may be configured to implement the method described in the foregoing method embodiments. For details, refer to descriptions in the foregoing method embodiments. The communications apparatus 1000 may be a chip or a network device, and is configured to implement the method implemented by the first network device or the second network device in the foregoing embodiments.

The communications apparatus 1000 includes one or more processors 1001. The processor 1001 may be a general-purpose processor, a dedicated processor, or the like. For example, the processor may be a baseband processor or a central processing unit. The baseband processor may be configured to process a communication protocol and communication data. The central processing unit may be configured to control the apparatus (for example, the network device), execute a software program, and process data of the software program. The communications apparatus 1000 may include a transceiver unit 1005, configured to input (receive) and output (send) signals. For example, the communications apparatus 1000 may be a chip, and the transceiver unit 1005 may be an input circuit and/or an output circuit or a transmission interface of the chip. The chip may be used on a network device.

Optionally, in a design, the processor 1001 may also include instructions 1003. The instructions may be run on the processor, so that the communications apparatus 1000 is enabled to perform the method implemented by the first network device or the second network device in the foregoing method embodiments.

In another possible design, the communications apparatus 1000 may also include a circuit. The circuit may implement a function of the first network device or the second network device in the foregoing method embodiments.

In another possible design, the communications apparatus 1000 may include one or more memories 1002 that store instructions 1004. The instructions may be run on the processor, so that the communications apparatus 1000 is enabled to perform the method described by the first network device or the second network device in the foregoing method embodiments. Optionally, the memory may further store data. Optionally, the processor may also store instructions and/or data. The processor and the memory may be separately disposed, or may be integrated together.

In another possible design, the communications apparatus 1000 may further include a transceiver unit 1005, a transmission interface, or an antenna. The transceiver unit 1005 may be referred to as a transceiver circuit, a transceiver, or the like. For example, the transceiver unit 1005 may implement a transceiver function of the apparatus through the antenna. The transmission interface (not shown in the figure) may be used for communication between network devices, or communication between the network device and a terminal device. Optionally, the transmission interface may be a wired communications interface, for example, an optical fiber communications interface.

The processor 1001 may be referred to as a processing unit, and is configured to control the apparatus.

In addition, because sending or receiving performed by the transceiver unit 1005 described in this embodiment of this application is under control of the processing unit (processor 1001), a sending or receiving action may also be described as being performed by the processing unit (processor 1001) in this embodiment of this application. This does not affect understanding of the solution by a person skilled in the art.

The first network device or the second network device in the foregoing apparatus embodiments may exactly correspond to the first network device or the second network device in the method embodiments, and a corresponding module or unit performs a corresponding step. For example, when the apparatus is implemented in a form of a chip, the receiving unit may be an interface circuit that is of the chip and that is configured to receive a signal from another chip or apparatus. The foregoing sending unit is an interface circuit of the apparatus, and is configured to send a signal to another apparatus. For example, when the apparatus is implemented as a chip, the sending unit is an interface circuit that is of the chip and that is configured to send a signal to another chip or apparatus.

It should be understood that, in the embodiments of this application, the processor may be a CPU, or may be another general-purpose processor, a DSP, an ASIC, an FPGA, or another programmable logic device, a discrete gate or transistor logic device, a discrete hardware component, or the like.

It should be further understood that the memory in the embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of random access memories (random access memories, RAMs) may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be understood that sequence numbers of the foregoing processes do not mean execution sequences in various embodiments of this application. The execution sequences of the processes should be determined by functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed system, communications apparatus, and method may be implemented in other manners. For example, the described apparatus embodiment is merely an example. For example, division into units is merely logical function division and may be other division during actual implementations. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical, form or another form.

The units described as separate parts may or may not be physically separate, and parts displayed as units may or may not be physical units, and may be located at one location, or may be distributed on a plurality of network units. Some or all of the units may be selected depending on actual requirements to achieve the objectives of the solutions in the embodiments.

In addition, functional units in the embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.
Although the present invention is described with reference to specific features and the embodiments thereof, definitely, various modifications and combinations may be made to them without departing from the scope of the present invention. Correspondingly, the specification and the accompanying drawings are merely example description of the present invention defined by the appended claims, and are considered as any of or all modifications, variations, or combinations that cover the scope of the present invention. Definitely, a person skilled in the art can make various modifications and variations to the present invention without departing from the scope of the present invention. In this way, if these modifications and variations of the present invention fall within the scope of the claims of the present invention, the present invention is also intended to cover these modifications and variations.

## Claims

1. A segment routing-based data transmission method performed by a first network device, wherein the method comprises:
• receiving (S 301) a first packet from a second network device, wherein the first packet comprises a first segment identifier, SID;
• obtaining (S 302), based on the first SID, a first network slice identifier corresponding to the first network device;
• generating (S 303) a second packet based on the first packet, wherein the second packet comprises the first network slice identifier, wherein
∘ in a first alternative, a flow label field in an internet protocol version 6, IPv6, packet header of the second packet comprises the first network slice identifier, or
∘ in a second alternative instead of the first alternative, a hop-by-hop, HBH, extension header of the second packet comprises the first network slice identifier; and
• sending (S 304) the second packet.

2. The method according to claim 1, wherein the first SID is used to indicate the first network device to determine the first network slice identifier based on the first SID, and encapsulate the first network slice identifier into the second packet.

3. The method according to claim 1 or 2, wherein the first SID comprises the first network slice identifier.

4. The method according to any one of claims 1 to 3, wherein an argument part of the first SID comprises the first network slice identifier.

5. The method according to claim 3 or 4, wherein the first SID comprises a function part, and the function part is used to indicate the first network device to determine the first network slice identifier based on the first SID, and encapsulate the first network slice identifier into the second packet.

6. The method according to any one of claims 1 to 5, wherein the first SID is a binding segment identifier, BSID.

7. A segment routing-based data transmission method performed by a second network device, wherein the method comprises:
• generating (S401), by the second network device, a first packet, wherein the first packet comprises a first segment identifier, SID, the first SID corresponds to a first network device,
and the first SID is used to indicate the first network device to determine a first network slice identifier based on the first SID, and encapsulate the first network slice identifier into the first packet to obtain a second packet, wherein the second packet comprises the first network slice identifier, wherein
∘ in a first alternative, a flow label field in an internet protocol version 6, IPv6, packet header of the second packet comprises the first network slice identifier, or
∘ in a second alternative instead of the first alternative, a hop-by-hop, HBH, extension header of the second packet comprises the first network slice identifier; and
• sending (S402) the first packet to the first network device.

8. The method according to claim 7, wherein the first SID comprises the first network slice identifier.

9. The method according to claim 8, wherein an argument part of the first SID comprises the first network slice identifier.

10. A first network device configured to perform any of the methods according to claims 1-6.

11. A second network device configured to perform any of the methods according to claims 7-9.

## Patentansprüche

1. Segment-Routing-basiertes Datenübertragungsverfahren, das durch eine erste Netzvorrichtung durchgeführt wird, wobei das Verfahren Folgendes umfasst:
• Empfangen (S 301) eines ersten Pakets von einer zweiten Netzvorrichtung, wobei das erste Paket eine erste Segmentkennung bzw. SID umfasst;
• Erhalten (S 302), basierend auf der ersten SID, einer der ersten Netzvorrichtung entsprechenden ersten Netz-"Slice"-Kennung;
• Erzeugen (S 303) eines zweiten Pakets basierend auf dem ersten Paket, wobei das zweite Paket die erste Netz-"Slice"-Kennung umfasst, wobei
∘ in einer ersten Alternative ein Flusslabel-Feld in einem Internet-Protokoll-Version-6- bzw. IPv6-Paketheader des zweiten Pakets die erste Netz-"Slice"-Kennung umfasst oder
∘ in einer zweiten Alternative anstelle der ersten Alternative ein "Hop-By-Hop"- bzw. HBH-Erweiterungsheader des zweiten Pakets die erste Netz-"Slice"-Kennung umfasst; und
• Senden (S 304) des zweiten Pakets.

2. Verfahren nach Anspruch 1, wobei die erste SID verwendet wird, um der ersten Netzvorrichtung anzugeben, die erste Netz-"Slice"-Kennung basierend auf der ersten SID zu bestimmen und die erste Netz-"Slice"-Kennung in das zweite Paket einzukapseln.

3. Verfahren nach Anspruch 1 oder 2, wobei die erste SID die erste Netz-"Slice"-Kennung umfasst.

4. Verfahren nach einem der Ansprüche 1 bis 3, wobei ein Argumentteil der ersten SID die erste Netz-"Slice"-Kennung umfasst.

5. Verfahren nach Anspruch 3 oder 4, wobei die erste SID einen Funktionsteil umfasst und der Funktionsteil verwendet wird, um der ersten Netzvorrichtung anzugeben, die erste Netz-"Slice"-Kennung basierend auf der ersten SID zu bestimmen und die erste Netz-"Slice"-Kennung in das zweite Paket einzukapseln.

6. Verfahren nach einem der Ansprüche 1 bis 5, wobei die erste SID eine Bindungssegmentkennung bzw. BSID ist.

7. Segment-Routing-basiertes Datenübertragungsverfahren, das durch eine zweite Netzvorrichtung durchgeführt wird, wobei das Verfahren Folgendes umfasst:
• Erzeugen (S401), durch die zweite Netzvorrichtung, eines ersten Pakets, wobei das erste Paket eine erste Segmentkennung bzw. SID umfasst, wobei die erste SID einer ersten Netzvorrichtung entspricht und die erste SID verwendet wird, um der ersten Netzvorrichtung anzugeben, eine erste Netz-"Slice"-Kennung basierend auf der ersten SID zu bestimmen und die erste Netz-"Slice"-Kennung in das erste Paket einzukapseln, um ein zweites Paket zu erhalten, wobei das zweite Paket die erste Netz-"Slice"-Kennung umfasst, wobei
∘ in einer ersten Alternative ein Flusslabel-Feld in einem Internet-Protokoll-Version-6- bzw. IPv6-Paketheader des zweiten Pakets die erste Netz-"Slice"-Kennung umfasst oder
∘ in einer zweiten Alternative anstelle der ersten Alternative ein "Hop-By-Hop"-bzw. HBH-Erweiterungsheader des zweiten Pakets die erste Netz-"Slice"-Kennung umfasst; und
• Senden (S402) des ersten Pakets an die erste Netzvorrichtung.

8. Verfahren nach Anspruch 7, wobei die erste SID die erste Netz-"Slice"-Kennung umfasst.

9. Verfahren nach Anspruch 8, wobei ein Argumentteil der ersten SID die erste Netz-"Slice"-Kennung umfasst.

10. Erste Netzvorrichtung, ausgelegt zum Durchführen eines beliebigen der Verfahren nach den Ansprüchen 1-6.

11. Zweite Netzvorrichtung, ausgelegt zum Durchführen eines beliebigen der Verfahren nach den Ansprüchen 7-9.

## Revendications

1. Procédé de transmission de données basée sur le routage de segments, réalisé par un premier dispositif de réseau, le procédé comprenant les étapes consistant à :
• recevoir (S301) un premier paquet en provenance d'un second dispositif de réseau, le premier paquet comprenant un premier identifiant de segment (SID) ;
• obtenir (S302), sur la base du premier SID, un premier identifiant de tranche de réseau correspondant au premier dispositif de réseau ;
• générer (S303) un second paquet sur la base du premier paquet, le second paquet comprenant le premier identifiant de tranche de réseau,
∘ selon une première alternative, un champ d'étiquette de flux dans un en-tête de paquet sur protocole Internet version 6 (IPv6) du second paquet comprenant le premier identifiant de tranche de réseau, ou
∘ selon une seconde alternative au lieu de la première alternative, un en-tête d'extension saut par saut (HBH) du second paquet comprenant le premier identifiant de tranche de réseau ; et
• envoyer (S304) le second paquet.

2. Procédé selon la revendication 1, dans lequel le premier SID est utilisé pour indiquer au premier dispositif de réseau de déterminer le premier identifiant de tranche de réseau sur la base du premier SID, et d'encapsuler le premier identifiant de tranche de réseau dans le second paquet.

3. Procédé selon la revendication 1 ou 2, dans lequel le premier SID comprend le premier identifiant de tranche de réseau.

4. Procédé selon l'une quelconque des revendications 1 à 3, dans lequel une partie argumentaire du premier SID comprend le premier identifiant de tranche de réseau.

5. Procédé selon la revendication 3 ou 4, dans lequel le premier SID comprend une partie fonctionnelle, et la partie fonctionnelle est utilisée pour indiquer au premier dispositif de réseau de déterminer le premier identifiant de tranche de réseau sur la base du premier SID, et d'encapsuler le premier identifiant de tranche de réseau dans le second paquet.

6. Procédé selon l'une quelconque des revendications 1 à 5, dans lequel le premier SID est un identifiant de segment de liaison (BSID).

7. Procédé de transmission de données basée sur le routage de segments, réalisé par un second dispositif de réseau, le procédé comprenant les étapes consistant à :
• générer (S401), par le second dispositif de réseau, un premier paquet, le premier paquet comprenant un premier identifiant de segment (SID), le premier SID correspondant à un premier dispositif de réseau, et le premier SID étant utilisé pour indiquer au premier dispositif de réseau de déterminer un premier identifiant de tranche de réseau sur la base du premier SID, et d'encapsuler le premier identifiant de tranche de réseau dans le premier paquet afin d'obtenir un second paquet, le second paquet comprenant le premier identifiant de tranche de réseau,
∘ selon une première alternative, un champ d'étiquette de flux dans un en-tête de paquet sur protocole Internet version 6 (IPv6) du second paquet comprenant le premier identifiant de tranche de réseau, ou
∘ selon une seconde alternative au lieu de la première alternative, un en-tête d'extension saut par saut (HBH) du second paquet comprenant le premier identifiant de tranche de réseau ; et
• envoyer (S402) le premier paquet au premier dispositif de réseau.

8. Procédé selon la revendication 7, dans lequel le premier SID comprend le premier identifiant de tranche de réseau.

9. Procédé selon la revendication 8, dans lequel une partie argumentaire du premier SID comprend le premier identifiant de tranche de réseau.

10. Premier dispositif de réseau, configuré pour réaliser l'un quelconque des procédés selon les revendications 1 à 6.

11. Second dispositif de réseau, configuré pour réaliser l'un quelconque des procédés selon les revendications 7 à 9.
